Europäisches Patentamt

European Patent Office

Office européen des brevets

(19)

(11) Publication number : **0 463 260 B1**

(12) **EUROPEAN PATENT SPECIFICATION**

(45) Date of publication of patent specification :
03.08.94 Bulletin 94/31

(51) Int. Cl.[5] : **C09K 11/06,** C09K 11/02,
C08J 3/22, C09B 67/00

(21) Application number : **90313580.4**

(22) Date of filing : **13.12.90**

(54) **Fluorescent pigments.**

(30) Priority : **25.06.90 US 542497**

(43) Date of publication of application :
**02.01.92 Bulletin 92/01**

(45) Publication of the grant of the patent :
**03.08.94 Bulletin 94/31**

(84) Designated Contracting States :
**BE DE ES FR GB IT**

(56) References cited :
**EP-A- 0 427 535
FR-A- 2 122 611
FR-A- 2 252 387
US-A- 3 915 884**

(73) Proprietor : **DAY-GLO COLOR CORP.**
**4515 St. Clair Avenue**
**Cleveland, Ohio 44103-1268 (US)**

(72) Inventor : **DiPietro, Thomas C.**
**3338 Stimson Road**
**Norton, Ohio 44203 (US)**

(74) Representative : **Harrison, David Christopher**
**et al**
**MEWBURN ELLIS**
**York House**
**23 Kingsway**
**London WC2B 6HP (GB)**

EP 0 463 260 B1

## Description

Unlike conventional organic pigments, which are usually precipitated single components, fluorescent pigments are solid state solutions of common fluorescent dyes in polymeric resins or matrices. Today's fluorescent pigment industry relies heavily on matrices that are formed by melt condensation of melamine, formaldehyde, and toluenesulfonamide. In order to manufacture products that possess the requisite resistance to many common organic solvents utilized in the paint and printing ink industries, the formaldehyde based products are formulated to yield thermosetting materials. These products are typically manufactured in a two-stage process, in which the resinous B-stage is converted to the C-stage by baking with convection ovens or infra-red panels. With some difficulty, the high molecular weight thermoset materials are reduced in particle size by conventional grinding methods.

Because two steps plus grinding are involved, a lot of waste occurs in the production of the conventional thermoset pigments.

These pigments have been used in a variety of solvents; however, they have a tendency to swell in many organic solvents. Swelling of the polymer matrix increases the viscosity of the solvent vehicle used in applying the pigments to various substrates. Viscosity increases and concomitant polymer swelling result in a shortened product shelf life, and in some instances, undesirable performance.

It is an object of the invention to provide a fluorescent pigment which affords good viscosity control when placed in a solvent. That is, the viscosity level of the solvent containing the pigment is stable with aging because the pigment resists swelling and dissolution.

Today, free formaldehyde is an environmental concern. It is difficult to totally remove unreacted formaldehyde from existing thermoset pigments. For this reason, it is an object of this invention to provide a product which does not require formaldehyde.

In the prior art, US-A-3915884 has shown a grindable polymer suitable as a matrix for fluorescent dyes, including a polyfunctional amine, a monocarboxylic compound and a polycarboxylic acid, in a range of molar ratios. This did not involve use of formaldehyde.

Inter alia, the use of aliphatic alkanolamines was not envisaged.

The present product is a fluorescent pigment which can be made in a one step process and then ground to the desired particle size, and is one in which the presence of alkanolamine and optionally of aliphatic or cycloaliphatic diols, allows modification of the melt characteristics to allow adequate dye incorporation without undue decomposition either of the dye or of the matrix.

The fluorescent pigment includes from eighty-five (85) to ninety-nine and nine-tenths (99.9) weight percent polymer matrix and from one-tenth (0.1) to fifteen (15) weight percent fluorescent dye, the weight percent being based on the combined weight of the polymer matrix and dye.

The polymer matrix is a polymer containing from fifty-five (55) to seventy-five (75) weight percent aromatic dicarboxylic acid based on the weight of the matrix. More preferably, the matrix contains from fifty-five (55) to sixty-five (65) percent aromatic dicarboxylic acid. Most preferably, the matrix contains from fifty-eight (58) to sixty-five (65) weight percent aromatic dicarboxylic acid.

The matrix contains from five (5) to twenty-five (25) weight percent of a diamine, based on the weight of the matrix. The diamine can be an aliphatic diamine having from two (2) to six (6) carbon atoms preferably two (2) to four (4) carbon atoms or a cycloaliphatic diamine having from four (4) to eight (8) carbon atoms. More preferably, the diamine will represent from five (5) to fifteen (15) weight percent of the matrix.

The matrix includes ten (10) to thirty (30) weight percent, more preferably ten (10) to twenty (20) weight percent, of an aliphatic alkanolamine having two (2) to five (5) carbon atoms.

The matrix can also include from zero (0) to thirty (30) weight percent, based on the weight percent of the matrix, of at least one of the monomers:

an aliphatic diol having from two (2) to five (5) carbon atoms; and
a cycloaliphatic diol having from six (6) to eight (8) carbon atoms.

These optional monomers may be present in from fifteen (15) to thirty (30) weight percent, or from fifteen (15) to twenty-five (25) weight percent, or from ten (10) to twenty (20) weight percent.

The matrix may also include from five (5) to fifteen (15) weight percent of modifier based on the weight of the matrix. These modifiers can be included to increase molecular weight by chain extension, alter softening or melting point of the matrix, provide enhanced compatibility with or dyes, resistance to solvents, provide functional groups of special affinity for particular fluorescent dyes, impart thermal stability to fluorescent dyes, or otherwise complement or enhance the suitability of the resin-carrier composition for a particular application. Preferred modifiers include bifunctional and monofunctional organic acids, monofunctional organic amines, monofunctional organic alcohols, metal oxides, metal carbonates, and metal acetates. More preferably, from five (5) to ten (10) weight percent of the polymer matrix will be modified.

From zero (0) to ten (10) weight percent cross-linker can also be added, weight percent being based on the weight of polymer matrix. From three (3) to six (6) weight percent cross-linker is preferred. Traditional cross-linkers can be used. Most preferred are the polyols although other cross-linkers known to those skilled in the art can be determined and utilized with a reasonable amount of experiment.

The thermoplastic pigment of this invention finds particularly good resistance to organic solvent, hereinafter called solvent. An illustrative, but not exhaustive list of the solvents which can be utilized includes ketones, esters, some alcohols, aliphatic solvents, aromatic solvents, chlorinated hydrocarbons, and some glycol ethers.

The polymer matrix is formed using the above reactants. Generally condensation polymerization will occur using the aromatic dicarboxylic acid and a diamine with the optional aliphatic alkanolamines, aliphatic diols and cycloaliphatic diols. The matrix can be modified using the chemicals described above and/or cross-linked. The final matrix is thermoplastic and can be re-heated until it becomes soft and mixable with the fluorescent dye. When the matrix is mixed with the fluorescent dye, it can be allowed to cool. Once cooled, the matrix can be comminuted to form pigment particles in the range from 0.5 to 20 microns, and more preferably from 1 to 10 microns.

The molecular weight of the polymer is preferably within the range of from 500 to 5000, and more preferably from within the range of 500 to 2000. The low molecular weight pigments produced are designed to be friable to facilitate the grinding needed to produce the ultimate pigment particle.

The monomers utilized to produce the polymer backbone are chosen to impart a crystallinity into the polymer structure. Crystallinity affords the polymer matrix with unusually good solvent resistance at very low molecular weight. Some amide/amide linkages formed by the reaction of aliphatic or cycloaliphatic diamine with aromatic dicarboxylic acid provide this crystallinity. The crystallinity and melting point characteristics are modified utilizing alkanolamines, aliphatic diols and cycloaliphatic diols.

Ester/ester and ester/amide linkages in the polymer matrix have different, albeit sometimes subtle affects on different dyes, affecting characteristics such as color brightness and brilliance. Thus, adjustment with alkanolamines and diols permits tailoring the matrix for particular dyes. Proper adjustment can be readily achieved without undue experimentation.

## THE DICARBOXYLIC ACIDS

The starting dicarboxylic acids or their esters or acid chlorides may be selected from such acids as isophthalic acid, terephthalic acid, 2.6-naphthalene dicarboxylic acid, and mixtures thereof. Of the acids, isophthalic acid is preferred.

The polymer matrix is a polymer containing from fifty-five (55) to seventy-five (75) weight percent aromatic dicarboxylic acid based on the weight of the matrix. More preferably, the matrix contains from fifty-five (55) to sixty-five (65) percent aromatic dicarboxylic acid. Most preferably, the matrix contains from fifty-eight (58) to sixty-five (65) weight percent aromatic dicarboxylic acid.

## THE DIAMINES

Representative diamines include ethylenediamine, propylenediamine, and trans 1,4-diaminocyclohexane. The diamines increase the melting point of the base polymer. If too high a melting point is achieved, the product cannot be processed because the melt is too viscous. Depending on the equipment, a melting point differential of 50° C. should be maintained. The upper limits are determined by the thermal stability of the dye and/or the base polymer.

## THE ALKANOLAMINES

The alkanolamines which may be used to produce the resin are of the general formula:

$$HO-R-NH_2$$

wherein R is a straight chain alkylene group containing from 2 - 5 carbon atoms, or more preferably containing from 2 - 3 carbon atoms. Representative alkanolamines include ethanolamine and propanolamine. The ester-/amide linkages formed in the polymer by use of alkanolamines tend to produce a lower melt product than do the amide/amide linkages afforded by the diamines.

## THE POLYHYDRIC ALCOHOL

These alcohols, in a preferred embodiment of the invention, are either cycloaliphatic or aliphatic. The cycloaliphatic polyhydric alcohols preferably contain not more than eight (8) carbon atoms, and most preferably 6-8 carbon atoms in the ring. The aliphatic polyhydric alcohols preferably contain 2 - 5 carbon atoms. Illustrative of these alcohols are ethylene glycol, propylene glycol, and cyclohexanedimethanol. The ester/ester linkages formed in the polymer backbone tend to produce a lower melt product than do amide/ester linkages. By varying the amount of diamine, alkanolamine, and diol, the melt characteristic of the polymer matrix can be modified to produce a product with a low enough melt temperature to provide adequate dye incorporation without unduly decomposing either the dye or the polymer matrix.

## CROSS-LINKING AGENTS

Moderate cross-linking, less than 10% and preferably less than 6%, can be used to increase the base polymer solvent resistance. Generally, cross-linking agents should result in a base polymer size increase without causing gel formation. The most preferred cross-linking agents are polyols which are defined here to be alcohols containing three (3) or more hydroxy groups. Exemplary polyols are glycerine and pentaerythritol, dipentaerythritol and trimethylolpropane. Other cross-linkers can be used also. Although, gelation has occurred using diisopropanolamines and diethenolamine, these should be usable as cross-linkers with appropriate adjustment of the polymer matrix and of the dosage. The term cross-linker here also includes branching agents.

## THE FLUORESCENT DYES

The fluorescent dyes employed in the composition include fluorescent organics which are brilliantly fluorescent when in solution. These daylight fluorescent-types are well known in the art, and belong to the dye families known as benzothioxanthene, xanthene, coumarin, naphthalimide, benzoxanthene, and acridine. Typical dyes include Basic Red 1, Basic Violet 10, Basic Violet 11, Basic Violet 16, Basic Yellow 40, Solvent Yellow 43, Solvent Yellow 44, Solvent Yellow 131, and Solvent Yellow 135. The fluorescent dyes comprise from 0.1 to about 15% of the total weight of the pigment. All these dyes have been tested and produce acceptable brilliant fluorescent pigments.

## THE PIGMENT

The pigment is usually formed by incorporating the fluorescent dye in the condensation resin during its formation and thereafter grinding the cooled resin to the proper particle size. This average particle size may range from about 0.1 to about 200 microns. A preferred average particle size range is from 1 to 10 microns, and most preferred average particle size is 2 - 10 microns. Alternatively, the fluorescent dye can be added to the resin in a separate step after the resin is formed. The resin has been found to be friable and easily ground. This grinding is done in a conventional manner.

## OPTIONAL INGREDIENTS

In addition to the foregoing components, the fluorescent composition of the present invention may be modified by inclusion of other ingredients which may react with acid, amine, and/or alcohol components. Modifiers can be included to increase the molecular weight by chain extension, alter the softening or melting point, provide enhanced compatibility, provide functional groups of special affinity for particular fluorescent dyes, impart thermal stability to fluorescent dyes, or otherwise complement or enhance the suitability of the resin carrier composition for a particular application. Preferred modifiers include bi- and mono functional acids, monofunctional amines, monofunctional alcohols, metal oxides, metal carbonates, and metal acetates. Examples of such modifiers include the following compounds.

Illustrative bifunctional acids include p-aminobenzoic acid and p-hydroxybenzoic acid.

Illustrative monofunctional acids include benzoic acid and cyclohexanecarboxylic acid.

Illustrative monofunctional amines include cyclohexylamine and benzylamine.

Illustrative monofunctional alcohols include benzyl alcohol and cyclohexanol.

Illustrative metal oxides, metal carbonates, and metal acetates, include zinc oxide, zinc carbonate, antimony triacetate, antimony pentoxide, antimony trioxide, calcium oxide, calcium carbonate, calcium hydroxide, magnesium oxide, and magnesium carbonate.

The amount of modifier used should not adversely affect the basic novel properties of the fluorescent composition. Usually, the amount of the reactive modifier will range from about one-tenth (0.1) to fifteen (15) percent, based on the total weight of the composition. These modifiers can also be used as chain terminators.

Conventional additives such as opacifiers, antioxidants, ultraviolet absorbers, and processing aids, may also be added to the fluorescent pigments. These materials may be added prior to, during, or after the condensation reaction is completed. In addition, the reaction can be catalyzed by use of catalyst such as are described in U.S. Patent 3,922,232, which is incorporated herein by reference.

## GENERAL METHOD OF PREPARING THE POLYMERS

The compositions of the present invention are prepared by condensation polymerization reactions illustrated by the following examples. The compositions are prepared by heating a mixture of the reactants to effect polymerization thereof. Polymerization is typically completed with heating to a maximum temperature from about 200° to about 270° C. and providing an adequate dwell time to complete the reaction as evidence by the cessation of water production. Fluorescent dye is then added with stirring.

## EXAMPLE 1

To a reaction vessel equipped with an agitator, heat source, nitrogen sparge, and condenser designed to remove the water of reaction, was charged 192.3 g of ethanolamine and 47.9 g of trans 1,4-diaminocyclohexane. To the blended components 76.9 g of benzoic acid and 540.5 g of isophthalic acid was added.

The components were heated to 230° C. and held for 120 minutes. A strong red pigment is provided by adding a combination of fluorescent dyes to the batch after 120 minutes at 230° C. The resin was cooled to room temperature and ground.

## EXAMPLE 2

To a reaction vessel equipped as in Example 1, was charged 64.1 g of ethanolamine, 27.9 g of ethylene glycol, and 22.3 g of trans 1,4-diaminocyclohexane. To the blended components, 36.6 g of benzoic acid and 257.0 g of isophthalic acid was added.

The components were heated to 220° C. and held for 140 minutes. A strong orange pigment is provided by adding a combination of fluorescent dyes to the batch after 140 minutes at 220° C. The resin was cooled to room temperature and ground.

## EXAMPLE 3

To a reaction vessel equipped as in Example 1, was charged 73.2 g ethanolamine, 48.0 g of cyclohexanedimethanol (90%), and 22.8 g of trans 1,4-diaminocyclohexane. To the blended components, 36.6 g of benzoic acid and 257 g of isophthalic acid was added.

The components were heated to 220° C. and held for 120 minutes. A strong orange pigment is provided by adding a combination of fluorescent dyes to the batch after 120 minutes at 220° C. The resin was cooled to room temperature and ground.

## EXAMPLE 4

To a reaction vessel equipped as in Example 1, was charged 50.6 g of ethanolamine, 34.2 g of ethylenediamine, and 13.8 g of pentaerythritol. To the blended components, 50.6 g of benzoic acid and 230 g of isophthalic acid was added.

The components were heated to 220° C. and held for 90 minutes. A strong pink pigment is provided by adding a combination of fluorescent dyes to the batch after 90 minutes at 220° C. The resin was cooled to room temperature and ground.

## EXAMPLE 5

To a reaction vessel equipped as in Example 1, was charged 79.3 g of ethanolamine and 24 g of ethylenediamine. To the blended components, 36.6 g of benzoic acid, 137.5 g of terephthalic acid and 137.5 g of isophthalic acid was added.

The components were heated to 250°C and held for 120 minutes. A strong yellow pigment is provided by adding a fluorescent yellow dye to the batch after 120 minutes at 250°C. The resin was cooled to room temperature and ground.

## EXAMPLE 6

To a reaction vessel equipped as in Example 1, was charged 91.5 g of ethanolamine and 22.8 g of trans-1,4-diaminocyclohexane. To the blended components, 228 g of isophthalic acid, 36.6 g of benzoic acid and 17.8 g of dimethyl - 2,6-naphthalene dicarboxylate was added.

The components were heated to 240°C and held for 120 minutes. A strong red pigment is provided by adding a combination of fluorescent dyes to the batch after 120 minutes at 230°C The resin was cooled to room temperature and ground.

## THE FIGURE

Figure 1 is a viscosity versus time plot for pigments in a solvent based gravure ink.
Figure 2 is a viscosity versus time plot for pigments in a solvent based screen ink.

## VISCOSITY CONTROL

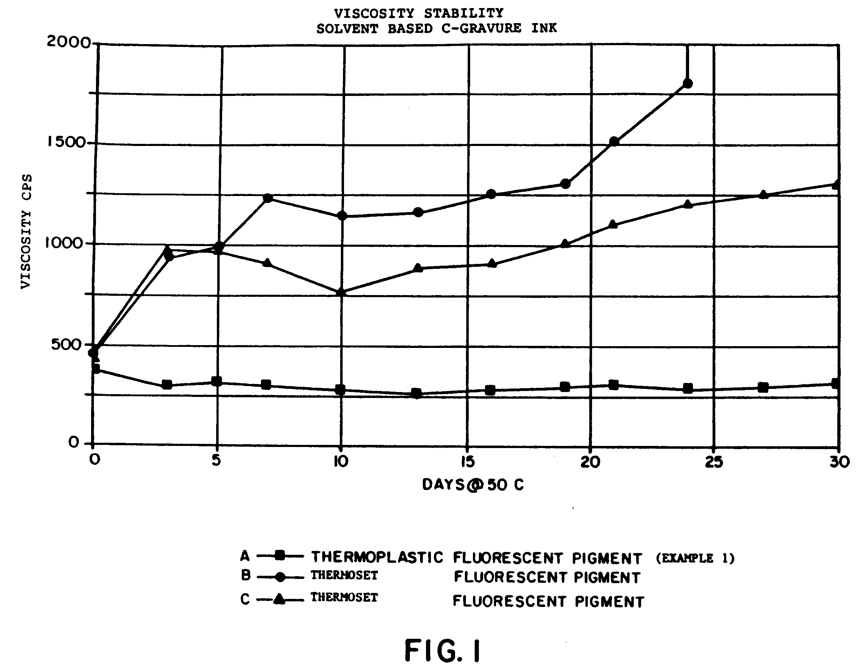

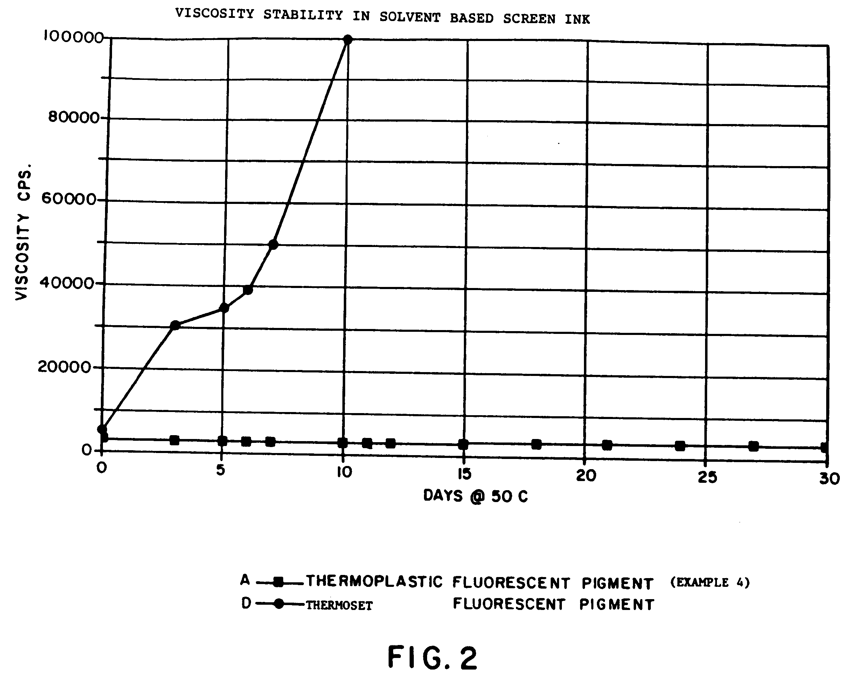

Viscosity control of pigments is afforded by the pigments of this invention. Figures 1 and 2 compare the pigment of this invention with thermoset pigments on a viscosity versus time basis using testing procedures used throughout the industry. According to those standards pigment, binder, and solvent are mixed and the components of each adjusted to provide a predetermined initial viscosity. The systems are then aged at 50°C.

The solvent resistance of the pigments of this invention are readily demonstrated by the relatively constant viscosity of the solvent containing the pigment over a period of thirty days. This is contrasted with the thermoset pigments in the same solvent. For thermoset pigments, dissolution of the polymer is evidenced by increase in viscosity with time. For the comparisons, commercially available thermoset fluorescent pigments B, C, and D were used. Good viscosity control was observed for each of the thermoplastic fluorescent pigments produced in Examples 1 - 4. The solvent used in Figure 1 example is a typical C-Gravure solvent containing solvent blend 90 - 75% toluene and, 10 - 25% N-propylacetate. The pigment made according to Example 1 was used.

The solvent used in Figure 2 is a Vinyl Screen Ink solvent: 1-Methoxy-2-Propylacetate. The pigment made according to Example 4 was used. Generally, a solvent will work as long as it does not substantially solubilize the pigment. Included below are additional solvents which have been tested with positive results similar to those illustrated in Figure 2 :

| | | |
|---|---|---|
| Methylacetate | Butylacetate | Trichloroethylene |
| Ethylacetate | N-Propanol | Perchloroethylene |
| N-Propylacetate | Isopropanol | Ethyleneglycol monobutylether |
| Isopropylacetate | N-butanol | Diethyleneglycomonobutylether |
| Acetone | Xylene | Glycerine |
| Methylethylketone | Toluene | Dioctylphthalate |
| Methylisobutylketone | Hexane | Dioxononylphthalate |
| Diisobutylketone | Heptane | Lactol Spirits |
| Mineral spirits | V.M. & P Naphtha | |

Failure occurred in the following solvents; when compared to the Figure 2 solvents:

| | |
|---|---|
| Methanol | Ethanol |
| Water | Cyclohexanone |
| Ethyleneglycol | Ethylene glycol monomethylether |
| Methylene chloride | |

Generally, a solvent system will work according to the invention as long as the solvent system is less hydrophilic than the ones listed above for which failure occurred. More specifically, the solvent system should work as long as the system is less hydrophilic than methylene chloride.

## Claims

1. A fluorescent pigment comprising:
   1) from eight-five (85) to ninety-nine and nine tenths (99.9) percent thermoplastic polymer matrix
   2) from one-tenth (0.1) to fifteen (15) weight percent fluorescent dye, weight percent being based on the combined weight of polymer matrix and dye; said polymer matrix containing
       a) fifty-five (55) to seventy-five (75) weight percent aromatic dicarboxylic acid based on the weight of the matrix,
       b) five (5) to twenty-five (25) weight percent based on the weight percent of the matrix of a diamine which is an aliphatic diamine having from two to six carbon atoms, or cycloaliphatic diamine having from four to eight carbon atoms,
       c) ten (10) to thirty (30) weight percent, based on the weight of the matrix of a monomer which is an aliphatic alkanolamine having from two to five carbon atoms,
       d) zero (0) to thirty (30) weight percent, based on the weight of the matrix of a monomer of an aliphatic diol having from two to five carbon atoms, or a cycloaliphatic diol having not more than eight carbon atoms; and
       e) zero (0) to fifteen (15) weight percent modifier, based on the weight of the matrix,
       f) said pigment being a particle having an average size from 2-100 microns.

2. A fluorescent pigment according to claim 1 wherein
   the aromatic dicarboxylic acid is isophthalic acid, terephthalic acid or 2,6-naphthalene dicarboxylic acid;
   the diamine is ethylene diamine, propylene diamine or trans-1,4-diaminocyclohexane;
   the aliphatic alkanol amine is ethanolamine or propanolamine;
   the aliphatic diol is ethylene glycol or propylene glycol;
   the cycloaliphatic diol is cyclohexane dimethanol;
   the modifier is p-aminobenzoic acid, p-hydroxybenzoic acid, benzoic acid, cyclohexane carboxylic acid, cyclohexylamine, benzylamine, benzyl alcohol, cyclohexanol, zinc oxide, zinc carbonate, antimony triacetate, antimony pentoxide, antimony trioxide, calcium oxide, calcium carbonate, calcium hydroxide, magnesium hydroxide, magnesium oxide, or magnesium carbonate;
   and the dye is a xanthene, a benzothioxanthene, a coumarin, a naphthalimide, a benzoxanthene or an acridine.

3. A fluorescent pigment comprising:
   1) from eight-five (85) to ninety-nine and nine tenths (99.9) percent thermoplastic polymer matrix
   2) from one-tenth (0.1) to fifteen (15) weight percent fluorescent dye, weight percent being based on the combined weight of polymer matrix and dye; said polymer matrix containing
       a) fifty-eight (58) to sixty-five (65) weight percent aromatic dicarboxylic acid based on the weight of the matrix,
       b) five (5) to fifteen (15) weight percent based on the weight percent of the matrix of a diamine which is an aliphatic diamine having from two to six carbon atoms or a cycloaliphatic diamine having from four to eight carbon atoms,
       c) ten (10) to twenty (20) weight percent, based on the weight of the matrix of a monomer which is an aliphatic alkanolamine having from two to three atoms, an aliphatic diol having from two to five carbon atoms, or a cycloaliphatic diol having from six to eight carbon atoms; and
       d) five (5) to ten (10) weight percent modifier, based on the weight of the matrix.

4. A pigment according to any one of the preceding claims including up to ten (10) weight percent cross-linker based on the weight of polymer matrix.

5. A pigment according to claim 4 wherein the cross-linker is from three (3) to six (6) weight percent.

6. A fluorescent pigment according to claim 4 or claim 5 wherein the cross-linker is glycerine, pentaerythritol, dipentaerythritol, or trimethylolpropane.

7. An ink containing a solvent for the ink and a pigment according to any one of the preceding claims, the solvent being such as not substantially to solubilize the pigment.

8. An ink according to claim 7 wherein the solvent is less hydrophilic than methylene chloride.

9. A method of producing fluorescent pigment having a polymer matrix and a fluorescent dye comprising:
   1) combining in a reaction vessel the ingredients of the polymer matrix defined in any one of claims 1 to 6,
   2) heating the reaction vessel to react the above ingredients forming a thermoplastic polymer matrix,
   3) adding from one-tenth (0.1) to fifteen (15) weight percent fluorescent dye based on a total weight of the mixture, and
   4) agitating until the dye is dispersed.

10. A method according to claim 9 further including the step of grinding the solidified product.

11. A method according to claim 9 or claim 10 wherein the dye is a xanthene, a benzothioxanthene, a coumarin, a naphthalimide, a benzoxanthene and an acridine.


**Patentansprüche**

1. Fluoreszierendes Pigment, umfassend:
   1) 85 bis 99,9 % thermoplastische Polymermatrix
   2) 0,1 bis 15 Gew.-% fluoreszierenden Farbstoff, wobei sich Gewichtsprozent auf das kombinierte Gewicht von Polymermatrix und Farbstoff bezieht; wobei die genannte Polymermatrix enthält:
      a) 55 bis 75 Gew.-% aromatische Dikarbonsäure, bezogen auf das Gewicht der Matrix,
      b) 5 bis 25 Gew.-%, bezogen auf die Gewichtsprozent der Matrix, eines Diamins, bei dem es sich um ein aliphatisches Diamin mit von 2 bis 6 C-Atomen oder ein zykloaliphatisches Diamin mit von 4 bis 8 C-Atomen handelt,
      c) 10 bis 30 Gew.-%, bezogen auf das Gewicht der Matrix, eines Monomers, bei dem es sich um ein aliphatisches Alkanolamin mit von 2 bis 5 C-Atomen handelt,
      d) 0 bis 30 Gew.-%, bezogen auf das Gewicht der Matrix, eines Monomers eines aliphatischen Diols mit von 2 bis 5 C-Atomen, oder eines zykloaliphatischen Diols mit nicht mehr als 8 C-Atomen; und
      e) 0 bis 15 Gew.-% Modifikator, bezogen auf das Gewicht der Matrix, wobei
      f) das genannte Pigment ein Teilchen mit einer durchschnittlichen Größe von 2-100 µm ist.

2. Fluoreszierendes Pigment nach Anspruch 1, worin
   die aromatische Dikarbonsäure Isophthalsäure, Terephthalsäure oder 2,6-Naphthalindikarbonsäure ist;
   das Diamin Äthylendiamin, Propylendiamin oder trans-1,4-Diaminozyklohexan ist;
   das aliphatische Alkanolamin Äthanolamin oder propanolamin ist;
   das aliphatische Diol Äthylenglykol oder Propylenglykol ist;
   das zykloaliphatische Diol Zyklohexandimethanol ist;
   der Modifikator p-Aminobenzoesäure, p-Hydroxybenzoesaure, Benzoesäure, Cyclohexancarbonsäure, Zyklohexylamin, Benzylamin, Benzylalkohol, Zyklohexanol, Zinkoxid, Zinkkarbonat, Antimontriacetat, Antimonpentoxid, Antimontrioxid, Kalziumoxid, Kalziumkarbonat, Kalziumhydroxid, Magnesiumhydroxid, Magnesiumoxid oder Magnesiumkarbonat ist;
   und der Farbstoff ein Xanthen, ein Benzothioxanthen, ein Kumarin, ein Naphthalimid, ein Benzoxanthen oder ein Acridin ist.

3. Fluoreszierendes Pigment, umfassend:
   1) 85 bis 99,9 % thermoplastische Polymermatrix,
   2) 0,1 bis 15 Gew.-% fluoreszierenden Farbstoff, wobei die Gewichtsprozent sich auf das kombinierte Gewicht von Polymermatrix und Farbstoff beziehen; wobei die genannte Polymermatrix enthält:
      a) 58 bis 65 Gew.-% aromatische Dikarbonsäure, bezogen auf das Gewicht der Matrix,
      b) 5 bis 15 Gew.-%, bezogen auf die Gewichtsprozent der Matrix, eines Diamins, bei dem es sich um ein aliphatisches Diamin mit 2 bis 6 C-Atomen oder ein zykloaliphatisches Diamin mit 4 bis 8 C-Atomen handelt,

c) 10 bis 20 Gew.-%, bezogen auf das Gewicht der Matrix, eines Monomers, bei dem es sich um aliphatisches Alkanolamin mit 2 bis 3 C-Atomen, ein aliphatisches Diol mit 2 bis 5 C-Atomen oder ein zykloaliphatisches Diol mit 6 bis 8 C-Atomen handelt, und

d) 5 bis 10 Gew.-% Modifikator, bezogen auf das Gewicht der Matrix.

4. Pigment nach einem der vorhergehenden Ansprüche, das bis zu 10 Gew.-% Vernetzungsmittel, bezogen auf das Gewicht der Polymermatrix, enthält.

5. Pigment nach Anspruch 4, worin das Vernetzungsmittel von 3 bis 6 Gew.-% ausmacht.

6. Fluoreszierendes Pigment nach Anspruch 4 oder 5, worin das Vernetzungsmittel Glycerin, Pentaerythrit, Dipentaerythrit oder Trimethylolpropan ist.

7. Tinte bzw. Farbe, die ein Lösungsmittel für die Tinte bzw. Farbe und ein Pigment nach einem der vorhergehenden Ansprüche enthält, wobei das Lösungsmittel so beschaffen ist, daß es das Pigment im wesentlichen nicht löslich macht.

8. Tinte bzw. Farbe nach Anspruch 7, worin das Lösungsmittel weniger hydrophil ist als Methylenchlorid.

9. Verfahren zur Herstellung von fluoreszierendem Pigment mit einer Polymermatrix und einem fluoreszierenden Farbstoff, umfassend:

1) das Kombinieren der in einem der Ansprüche 1 bis 6 definierten Ingredienzien der Polymermatrix in einem Reaktionsgefäß,

2) das Erwärmen des Reaktionsgefäßes, um die obigen, eine thermoplastische Polymermatrix bildenden Ingredienzien umzusetzen,

3) die Zugabe von 0,1 bis 15 Gew.-% fluoreszierenden Farbstoff, bezogen auf das Gesamtgewicht der Mischung, und

4) Rühren, bis der Farbstoff dispergiert ist.

10. Verfahren nach Anspruch 9, das weiters den Schritt des Mahlens des verfestigten Erzeugnisses umfaßt.

11. Verfahren nach Anspruch 9 oder 10, worin der Farbstoff ein Xanthen, ein Benzothioxanthen, ein Kumarin, ein Naphthalimid, ein Benzoxanthen oder ein Acridin ist.

## Revendications

1. Pigment fluorescent comprenant :

1) de quatre-vingt-cinq (85) à quatre-vingt-dix-neuf et neuf dixièmes (99,9) pour cent d'une matrice d'un polymère thermoplastique

2) de un dixième (0,1) à quinze (15) pour cent en poids d'un colorant fluorescent, le pourcentage pondéral étant basé sur le poids combiné de la matrice du polymère et du colorant ; ladite matrice du polymère contenant

a) cinquante-cinq (55) à soixante-quinze (75) pour cent en poids d'acide dicarboxylique aromatique, en se basant sur le poids de la matrice,

b) cinq (5) à vingt-cinq (25) pour cent en poids, en se basant sur le pourcentage pondéral de la matrice, d'une diamine qui est une diamine aliphatique ayant de deux à six atomes de carbone ou une diamine cycloaliphatique ayant de quatre à huit atomes de carbone,

c) dix (10) à trente (30) pour cent en poids, en se basant sur le poids de la matrice, d'un monomère qui est une alcanolamine aliphatique ayant de deux à cinq atomes de carbone,

d) zéro (0) à trente (30) pour cent en poids, en se basant sur le poids de la matrice, d'un monomère diol aliphatique ayant deux à cinq atomes de carbone ou bien d'un diol cycloaliphatique n'ayant pas plus de huit atomes de carbone; et

e) zéro (0) à quinze (15) pour cent en poids d'un modificateur, en se basant sur le poids de la matrice,

f) ledit pigment étant une particule ayant une grandeur moyenne de 2-100 microns.

2. Pigment fluorescent selon la revendication 1, où l'acide dicarboxylique aromatique est l'acide isophtalique, l'acide téréphtalique ou l'acide 2,6-naphtalènedicarboxylique ;

la diamine est l'éthylène diamine, la propylène diamine ou le trans-1,4-diaminocyclohexane ;

l'alcanolamine aliphatique est l'éthanolamine ou la propanolamine ;

le diol aliphatique est l'éthylène glycol ou le propylène glycol ;

le diol cycloaliphatique est le cyclohexane diméthanol;

le modificateur est l'acide p-aminobenzoique, l'acide p-hydroxybenzoïque, l'acide benzoïque, l'acide cyclohexane carboxylique, la cyclohexylamine, la benzylamine, l'alcool benzylique, le cyclohexanol, l'oxyde de zinc, le carbonate de zinc, le triacétate d'antimoine, le pentoxyde d'antimoine, le trioxyde d'antimoine, l'oxyde de calcium, le carbonate de calcium, l'hydrate de calcium, l'hydroxyde de magnésium, l'oxyde de magnésium ou le carbonate de magnésium ;

et le colorant est un xanthène, un benzothioxanthène une coumarine, un naphtalimide, un benzoxanthène ou une acridine.

**3.** Pigment fluorescent comprenant

1) de quatre-vingt-cinq (85) à quatre-vingt-dix-neuf et neuf dixièmes (99,9) pour cent d'une matrice d'un polymère thermoplastique

2) de un dixième (0,1) à quinze (15) pour cent en poids d'un colorant fluorescent, le pourcentage pondéral étant basé sur le poids combiné de la matrice du polymère et du colorant ; ladite matrice du polymère contenant

a) cinquante-huit (58) à soixante-cinq (65) pour cent en poids d'acide dicarboxylique aromatique, en se basant sur le poids de la matrice,

b) cinq (5) à quinze (15) pour cent en poids, en se basant sur le pourcentage pondéral de la matrice ,d'une diamine qui est une diamine aliphatique ayant deux à six atomes de carbone ou une diamine cycloaliphatique ayant quatre à huit atomes de carbone,

c) dix (10) à vingt (20) pour cent en poids, en se basant sur le poids de la matrice ,d'un monomère qui est une alcanolamine aliphatique ayant deux à trois atomes, d'un diol aliphatique ayant deux à cinq atomes de carbone ou d'un diol cycloaliphatique ayant six à huit atomes de carbone ; et

d) cinq (5) à dix (10) pour cent en poids d'un modificateur,en se basant sur le poids de la matrice.

**4.** Pigment selon l'une quelconque des revendications précédentes, comprenant jusqu'à dix (10) pour cent en poids d'un agent réticulant,en se basant sur le poids de la matrice du polymère.

**5.** Pigment selon la revendication 4, où l'agent réticulant est présent à raison de trois (3) à six (6) pour cent en poids.

**6.** Pigment fluorescent selon la revendication 4 ou la revendication 5, où l'agent réticulant est la glycérine, le pentaérythritol, le dipentaérythritol ou le triméthylolpropane.

**7.** Encre contenant un solvant pour l'encre et un pigment selon l'une quelconque des revendications précédentes, le solvant étant tel qu'il ne solubilise sensiblement pas le pigment.

**8.** Encre selon la revendication 7, où le solvant est moins hydrophile que le chlorure de méthylène.

**9.** Méthode de production d'un pigment fluorescent ayant une matrice d'un polymère et un colorant fluorescent, consistant à :

1) combiner ,dans un récipient réactionnel,les ingrédients de la matrice de polymère définis selon l'une quelconque des revendications 1 à 6,

2) chauffer le récipient réactionnel pour faire réagir les ingrédients ci-dessus et former une matrice d'un polymère thermoplastique,

3) ajouter un dixième (0,1) à quinze (15) pour cent en poids du colorant fluorescent, en se basant sur un poids total du mélange et

4) soumettre à agitation jusqu'à dispersion du colorant.

**10.** Méthode selon la revendication 9, comprenant de plus l'étape de broyer le produit solidifié.

**11.** Méthode selon la revendication 9 ou la revendication 10 où le colorant est un xanthène, un benzothioxanthène, une coumarine, un naphtalimide, un benzoxanthène et une acridine.

VISCOSITY STABILITY
SOLVENT BASED C-GRAVURE INK

A ──■── THERMOPLASTIC FLUORESCENT PIGMENT (EXAMPLE 1)
B ──●── THERMOSET FLUORESCENT PIGMENT
C ──▲── THERMOSET FLUORESCENT PIGMENT

FIG. I

EP 0 463 260 B1

VISCOSITY STABILITY IN SOLVENT BASED SCREEN INK

VISCOSITY CPS.

DAYS @ 50 C

A ■ THERMOPLASTIC FLUORESCENT PIGMENT (EXAMPLE 4)
D ● THERMOSET FLUORESCENT PIGMENT

FIG.2